# EUROPEAN PATENT SPECIFICATION

(11) **EP 3 998 193 B1**
(45) Date of publication and mention of the grant of the patent: **06.11.2024**
(21) Application number: 20894945.3
(22) Date of filing: 14.12.2020
(51) Int. Cl.: B64C 3/34, B64C 1/14

(54) **AIRPLANE WING FUEL TANK ACCESS COVER AND STRUCTURE OF PERIPHERAL AREA OF ACCESS COVER**
TANKZUGANGSDECKEL FÜR FLUGZEUGFLÜGEL UND STRUKTUR DES PERIPHEREN BEREICHS EINES ZUGANGSDECKELS
COUVERCLE D'ACCÈS DE RÉSERVOIR DE CARBURANT D'AILE D'AVION ET STRUCTURE DE ZONE PÉRIPHÉRIQUE DE COUVERCLE D'ACCÈS

(30) Priority: 15.09.2020 CN 202010969236
(43) Date of publication of application: 18.05.2022
(73) Proprietor: Beijing Aeronautical Science & Technology Research Institute,Commercial Aircraft Corporation of China, Beijing 102211 (CN); Commercial Aircraft Corporation Of China, Ltd., Shanghai 200126 (CN)
(72) Inventor: MA, Bo, Beijing 102211 (CN); LUO, Dan, Beijing 102211 (CN); WANG, Jianli, Beijing 102211 (CN); XU, Jifeng, Beijing 102211 (CN)
(74) Representative: Gille Hrabal Partnerschaftsgesellschaft mbB Patentanwälte
(86) International application number: PCT/CN2020/135997
(87) International publication number: WO 2022/057115

(56) References cited:
- EP-A1- 2 746 150
- EP-A1- 2 746 150
- WO-A1-2010/038052
- CN-A- 106 585 957
- CN-A- 111 924 113
- CN-U- 204 937 461
- CN-U- 204 937 461
- CN-U- 205 076 027
- FR-A1- 3 043 062
- US-A- 4 291 816
- US-A- 4 579 248
- US-B2- 8 016 235
- US-B2- 9 193 470

## Description

### TECHNICAL FIELD

The present invention relates to the technical field of aviation, and in particular to an aircraft wing fuel tank access cover and a structure in a circumferential region of the access cover.

### BACKGROUND

With the development of technologies, composites having the advantages of reducing the weight of an aircraft, prolonging the time interval of normal overhaul of the aircraft and prolonging the service life of the aircraft have been increasingly applied to aircraft structures. There are two following technical solutions for designing and manufacturing a compression-ring-type aluminum alloy access cover by adopting a design concept of a traditional aircraft wing access cover.

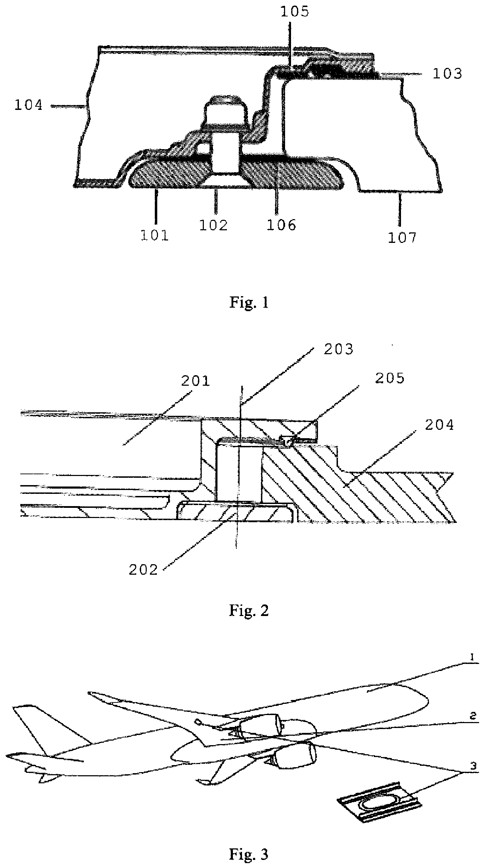

A first compression-ring-type metal access cover 104 (with protective ring 105, washer 106, and lower wall skin 107) is mainly composed of an inner access cover and a compression ring 101, as shown in Fig. 1, the access cover 104 and the compression ring 101 are made of aluminum alloy, the access cover 104 is formed by combining two parts between which a cavity is formed, a nut is fixedly disposed in the cavity and cooperates with a screw (bolt 102) for connecting the compression ring 101 to the access cover 104 to form a certain clamping force with a lower panel, and a sealing ring 103 is disposed at a side where the outside of the access cover 104 is connected with the inside of the lower panel so that a sealing demand of the access cover 104 is met. A second compression-ring-type metal access cover 201 is mainly composed of an inner access cover and a compression ring 202, as shown in Fig. 2, the access cover 201 and the compression ring 202 are made of aluminum alloy, the access cover 201 is machined, the middle of the access cover 201 is provided with a reinforcing rib, an anchor nut (and bolt) 203 is fixedly disposed at the upper side of the access cover 201 and cooperates with a screw for connecting the compression ring 202 to the access cover 201 to form a certain clamping force with the lower panel 204, and a sealing ring (sealing strip 205) is disposed at a side where the outside of the access cover 201 is connected with the inside of the lower panel 204 so that a sealing demand of the access cover 201 is met.

Based on the prior art, there is a galvanic corrosion risk due to the adoption of an existing single-layer access cover and wing composite main structure, glass fiber is required to be increased to avoid galvanic corrosion, and meanwhile, a single-layer access cover not only needs to meet a demand on oil pressure, but also needs to meet the outer shock resistance so as to be difficult to achieve. Therefore, it is necessary to research an aircraft wing fuel tank access cover for overcoming defects in the prior art, thereby solving or relieving one or more of the above-mentioned problems.

Document FR3043062A1 discloses an aircraft access cover comprising an outer panel and an inner panel that comprises at least one metallic threaded part capable of receiving at least one screw so as to secure the outer panel to the inner panel. It is also referred to the documents US8016235B2, US4579248A, EP2746150A1, CN204937461U, and US4291816A.

### SUMMARY

For this purpose, the present invention provides an aircraft wing fuel tank access cover according to claim 1. Preferred embodiments are described in the dependent claims. A composite access cover can thereby be realized to avoid galvanic corrosion brought by single aluminum alloy access cover, improve the rigidity of the inner access cover and also reduce the weight of the wing access cover.

The present invention provides an aircraft wing fuel tank access cover, comprising an inner access cover, an outer access cover, a sandwich layer, a fixing piece and a fastener;
the inner access cover is hermetically connected to a wing lower panel and the outer access cover through the sandwich layer;
the fixing piece is disposed in the inner access cover; and
the fastener passes through a fixing hole in the outer access cover and is connected with the fixing piece, whereby the sandwich layer is of a composite honeycomb sandwich structure or a foam sandwich structure.

As the above-mentioned aspect and any one possible implementation, further provided is an implementation in which the aircraft wing fuel tank access cover further comprises a sealing strip as well as an inner access cover interior skin and a sunken inner access cover skin on the inner access cover;
the inner access cover interior skin is located at the upper part of the inner access cover; and
the sunken inner access cover skin is located at the lower part of the inner access cover.

As the above-mentioned aspect and any one possible implementation, further provided is an implementation in which the outer access cover is of a titanium alloy structure or an aluminum alloy structure.

As the above-mentioned aspect and any one possible implementation, further provided is an implementation in which the fixing piece is an adhesive rivetless floating anchor self-locking nut; and the fastener is a bolt.

As the above-mentioned aspect and any one possible implementation, further provided is an implementation in which the adhesive rivetless floating anchor self-locking nut is disposed in the inner access cover after an adhesive is cured.

As the above-mentioned aspect and any one possible implementation, further provided is an implementation in which when the sealing strip is a silicon rubber sealing strip, the silicon rubber sealing strip is embedded between the wing lower panel and the inner access cover interior skin; and
the silicon rubber sealing strip is M-shaped or O-shaped.

As the above-mentioned aspect and any one possible implementation, further provided is an implementation in which when the sealing strip is a polytetrafluoroethylene sealing strip, the polytetrafluoroethylene sealing strip is attached to a junction of the wing lower panel and the inner access cover interior skin.

As the above-mentioned aspect and any one possible implementation, further provided is an implementation in which the bolt passes through the fixing hole in the outer access cover and the sunken inner access cover skin and is connected with the adhesive rivetless floating anchor self-locking nut.

As the above-mentioned aspect and any one possible implementation, further provided is an implementation in which the inner access cover further comprises an L-shaped piece or a U-shaped piece, and the L-shaped piece or the U-shaped piece is connected with the inner access cover through a hot melt adhesive film.

As the above-mentioned aspect and any one possible implementation, further provided is an implementation in which a structure in a circumferential region of an aircraft wing fuel tank access cover comprises the above-mentioned aircraft wing fuel tank access cover, wherein the wing lower panel comprises an intercalation sunken region at access cover of wing lower panel and a plurality of stringers;
the plurality of stringers are disposed at the same side of the wing lower panel, and the intercalation sunken region at access cover of wing lower panel is pre-disposed among the stringers;
the wing lower panel and the intercalation sunken region at access cover of wing lower panel are integrally formed; and
the inner access cover is disposed in the intercalation sunken region at access cover of wing lower panel.

Compared with the prior art, the present invention can achieve the following technical effects: the titanium alloy or aluminum alloy outer access cover is disposed to guarantee the demands on the shock resistance and lightning protection of the fuel tank access cover, play a role in protecting a composite inner access cover and improve the rigidity of the fuel tank access cover; the composite inner access cover is capable of effectively reducing the weight of a fuel tank access cover assembly and also reducing the weight of a wing, so that galvanic corrosion brought by a single aluminum alloy access cover is avoided; the wing lower panel is provided with the intercalation sunken region at access cover of wing lower panel, this region is designed to provide a flat mounting region for the composite inner access cover, also guarantee fitting of the outer access cover and the lower panel, avoid access covers from protruding and effectively increase the aerodynamic efficiency of the wing; the composite inner access cover is formed by co-cementing, the sandwich layer adopts a honeycomb structure or a foam structure, thereby providing a certain rigidity, guaranteeing the demand on oil pressure of a fuel tank, and also guaranteeing the manufacture feasibility and the service performance and meeting the sealing and detaching demands of the access cover; and the present invention provides a solution of the composite of the composite inner access cover of a fuel tank, so that it is ensured that functions of the access cover are achieved, and the problem of potential difference possibly brought by a full-metal access cover is avoided.

Of course, when any product provided by the present invention is implemented, it is not always required that all the above-mentioned technical effects are achieved at the same time.

### BRIEF DESCRIPTION OF THE DRAWINGS

In order to more clearly describe technical solutions of embodiments of the present invention, accompanying drawings required to be used in the embodiments will be briefly introduced below. Apparently, the accompanying drawings in the following description show only some embodiments of the present invention, and a person of ordinary skill in the art can still derive other accompanying drawings from these accompanying drawings without creative efforts.
Fig. 1 is a first schematic diagram showing a compression-ring-type metal access cover in the background part of the present invention;
Fig. 2 is a second schematic diagram showing a compression-ring-type metal access cover in the background part of the present invention;
Fig. 3 is a schematic diagram showing specific positions of an aircraft wing fuel tank access cover and a structure in a circumferential region of the access cover on an aircraft wing in an embodiment of the present invention;
Fig. 4 is a schematic diagram showing structures of an aircraft wing fuel tank access cover and a structure in a circumferential region of the access cover provided in an embodiment of the present invention;
Fig. 5 is a first schematic diagram showing direction-A sections of an aircraft wing fuel tank access cover and a structure in a circumferential region of the access cover provided in an embodiment of the present invention;
Fig. 6 is a second schematic diagram showing direction-A sections of an aircraft wing fuel tank access cover and a structure in a circumferential region of the access cover provided in an embodiment of the present invention;
Fig. 7 is a third schematic diagram showing direction-A sections of an aircraft wing fuel tank access cover and a structure in a circumferential region of the access cover provided in an embodiment of the present invention;
Fig. 8 is a schematic diagram showing direction-B sections of an aircraft wing fuel tank access cover and a structure in a circumferential region of the access cover provided in an embodiment of the present invention; and
Fig. 9 is a fourth schematic diagram showing direction-A sections of an aircraft wing fuel tank access cover and a structure in a circumferential region of the access cover provided in an embodiment of the present invention;
in which:
1-fuselage; 2-wing; 3-access cover of wing lower panel; 4-first stringer; 5-wing lower panel; 6-intercalation sunken region at access cover of wing lower panel; 7-inner access cover; 8-second stringer; 9-outer access cover; 71-inner access cover interior skin; 72-sealing strip; 73-sandwich layer; 74-adhesive rivetless floating anchor self-locking nut; 75-adhesive; 76-sunken inner access cover skin; 77-bolt; and
78-L-shaped piece.

### DETAILED DESCRIPTION

In order to better understand the technical solutions of the present invention, the embodiments of the present invention will be described in detail below in combination with the accompanying drawings.

It should be clear that the described embodiments are only a part of the embodiments of the present invention, not all the embodiments.

Terms used in the embodiments of the present invention are only for the purpose of describing specific embodiments, rather than limiting the present invention. "a", "the" and "this" in a singular form used in the embodiments and the appended claims of the present invention are also intended to include a plural form unless other meanings are clearly expressed in a context.

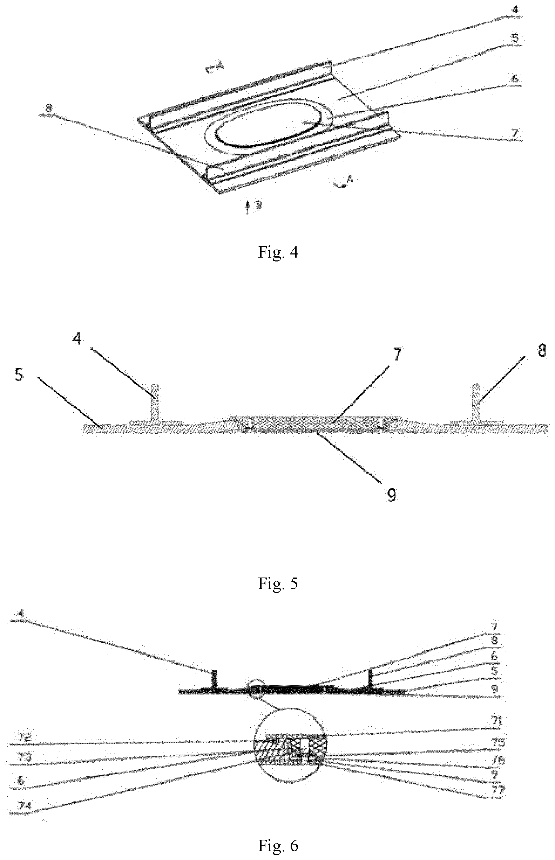

The present invention provides an aircraft wing fuel tank access cover and a structure in a circumferential region of the access cover, as shown in Fig. 3 to Fig. 4, mainly comprising a wing lower panel 5, a first stringer 4, a second stringer 8, a composite inner access cover 7, a metal outer access cover 9, a sealing strip 72 and the like. As shown in Fig. 5 to Fig. 7, the wing lower panel 5 is provided with an intercalation sunken region at access cover of wing lower panel 6, this region provides a flat mounting region for the composite inner access cover 7 and also guarantees fitting of the outer access cover 9 and the wing lower panel 5 and avoids the phenomenon that the outer access cover 9 protrudes to affect the aerodynamic efficiency of a wing; and when the wing lower panel 5 is manufactured, the wing lower panel 5 and the intercalation sunken region at access cover of wing lower panel 6 are integrally formed. An inner access cover 7 can also be referred to as the composite inner access cover 7, and an outer access cover 9 can also be referred to as the metal outer access cover 9.

It should be understood that the wing lower panel 5 can be generally provided with a plurality of stringers, and two stringers described herein can be understood for the purpose of clearer illustration.

As shown in Fig. 5 to Fig. 7, the composite inner access cover 7 is composed of an inner access cover interior skin 71, a sunken inner access cover skin 76, a sandwich layer 73 and an adhesive rivetless floating anchor self-locking nut 74. In order to ensure that the composite inner access cover 7 is formed by co-cementing, the sandwich layer 73 can adopt a honeycomb sandwich structure or a foam sandwich structure, thereby providing a certain rigidity, guaranteeing the demand on oil pressure of a fuel tank, and also guaranteeing the manufacture feasibility and the service performance and meeting the sealing and detaching demands of the inner access cover.

The honeycomb interlayer structure or the honeycomb sandwich structure refers to a laminated composite sandwiched with a lightweight core material between two thin skins. Functionally, the honeycomb interlayer structure or the honeycomb sandwich structure is similar to an I-section beam visible on a steel rail. That is, two flanges of an I-section material correspond to the skins to bear a bending stress, a web plate of the I-section material corresponds to a core material to specially bear lateral shear, and therefore, their functions are divided clearly.

The foam sandwich structure is a composite structure composed of two rigid panels and a foam core sandwiched therebetween. The panels are lightweight high-strength aluminum alloy plates or carbon fiber, glass fiber and aramid composite laminates; and the foam core is made of foamed plastics such as thermosetting phenolic, epoxy and acrylic acid and foamed plastics such as thermoplastic polyurethane, polystyrene and polyvinyl chloride. The foamed interlayer structure has the characteristics of high flexural rigidity, light weight, sufficient utilization of material strength and good low temperature resistance, but has lower shearing strength than a Nomex honeycomb interlayer structure under the same density. There are two methods for manufacturing the interlayer structure: one of the methods comprises that a foam core material is firstly manufactured by machining according to the shape of a part and is then bonded with a skin material, wherein the skin can be a rigid plate, or a fiber (fabric)-impregnated resin is prepared into a prepreg to be laid on the core material; and the other method comprises that panels are firstly manufactured to be fixed to surrounding bulkheads, a foam material is placed in a space defined by the panels and the bulkheads, and the foam material is capable of filling the space to manufacture the interlayer structure. The overall performance of the material depends on the materials of the panels and the core material, for example, the interlayer structure made of a rigid polyurethane or acrylic foam core can be used as a bearing structural member, but a flexible foam interlayer structure made of thermoplastic resin is great in deformation when bearing a force so as to be used as a damping and sound insulating part. The foam interlayer structure is most applied to aircrafts, ships, sports and medical instruments, for example, the foam interlayer structure is used for manufacturing cabin doors of aircrafts, rudders, helicopter rotors, panels of aircrafts and ships, snowboards and surfboards in sports goods, medical CT couches and the like.

As shown in Fig. 5 to Fig. 8, the metal outer access cover 9 is made of a metal material and is provided with a bevel edge matched with the wing lower panel 5, so that an assembly demand is met; a certain bolt hole (fixing hole) is provided to guarantee the assembly of the inner access cover 7 and the outer access cover 9, so that a certain clamping force is formed; and a non-bearing access cover solution is provided to meet the functional demand of the access cover. Specifically, a bolt 77 passes through the bolt hole in the outer access cover 9 and the sunken inner access cover skin 76 at the lower part of the inner access cover and is connected with the adhesive rivetless floating anchor self-locking nut 74.

The self-locking nut generally works by virtue of a friction force according to a principle of pressing embossed teeth into a preset hole of a metal plate, and generally, the pore diameter of the preset hole is slightly smaller than that of a clinch nut. The nut is connected with a locking mechanism, when the nut is screwed, a ruler body is locked by the locking mechanism, and a ruler frame is incapable of freely moving, so that a locking purpose is achieved; and when the nut is unscrewed, the ruler body is unlocked by the locking mechanism, and the ruler frame moves along the ruler body. There are other series comprising a high-strength self-locking nut which serves as a kind of self-locking nut and has high strength and high reliability; a nylon self-locking nut which is a novel anti-loose fastening part with high vibration resistance and can be applied to various machines and electrical products with the temperatures of -50-100°C; a floating self-locking nut which is a double-lug sealing and floating self-locking nut composed of four parts comprising a sealing cover, a self-locking nut, a pressing ring and a sealing ring; and a spring self-locking nut which is a spring clamp self-locking nut composed of an S-shaped spring clamp and a self-locking nut. The self-locking nut is applied to the fields of railway casting, rail traffic, driving systems, mining equipment, highways, military application, oil extraction machinery, automobile industry, communal facilities, subways, engines, building machinery, aerospace, drilling equipment, bridges, generators, agricultural machinery, ship industry, metallurgical equipment, trains, compressors, medical instruments, signal systems and wind power generation.

As shown in Fig. 5 to Fig. 7, the sealing strip 72 can adopt an O-shaped or M-shaped silicon rubber sealing strip and is embedded into the inner access cover 7 to play a sealing role. Of course, the sealing strip can also adopt an in-line sealing strip which is made of a polytetrafluoroethylene material and is attached between the inner access cover 7 and the skin of the wing lower panel 5 to play a sealing role.

The wing lower panel 5 is provided with the intercalation sunken region at access cover of wing lower panel 6, this region is designed to provide a flat mounting region for the composite inner access cover, also guarantee fitting of the outer access cover 9 and the wing lower panel 5, avoid the outer access cover 9 from protruding and effectively increase the aerodynamic efficiency of the wing.

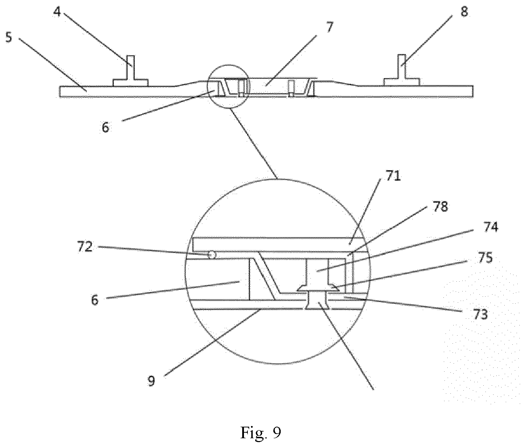

As shown in Fig. 9, it should be understood that, not limited to the above technology, in a process of preparing the inner access cover 7, curing occurs twice or three times. As a bearing structure, the inner access cover 7 is pressurized to 3-6 atmospheric pressures during curing, which can result in the situation that a composite foam sandwich or a honeycomb sandwich is incapable of tightly fitting to the adhesive rivetless floating anchor self-locking nut 74, and furthermore, there is a risk of local collapse; if there is such a situation, an L-shaped piece 78 or a U-shaped piece can be additionally disposed on the adhesive rivetless floating anchor self-locking nut 74, the L-shaped piece 78 or U-shaped piece can be a composite piece or a metal piece; if the L-shaped piece 78 or U-shaped piece is the metal piece, it is possible to generate the problem of galvanic corrosion, glass-fiber fabric has to be locally laid for preventing galvanic corrosion; and the L-shaped piece 78 or U-shaped piece is adhered to a concave skin in a way of hot melt adhesive film adhesion, so that local crushing of the flat skin during formation is avoided, meanwhile, the area of a honeycomb or foam core is reduced, it is convenient to manufacture the honeycomb or foam core and an overall structure, and furthermore, lighter weight is achieved while the strength is guaranteed. The L-shaped piece can be an L-shaped intercalation piece, and the U-shaped piece can be a U-shaped intercalation piece.

A hot melt adhesive film is a film product with or without release paper and can be conveniently subjected to continuous or intermittent operation so as to be widely applied to adhesion of various fabrics, sheets of paper, polymer materials and metals.

### Embodiment 1

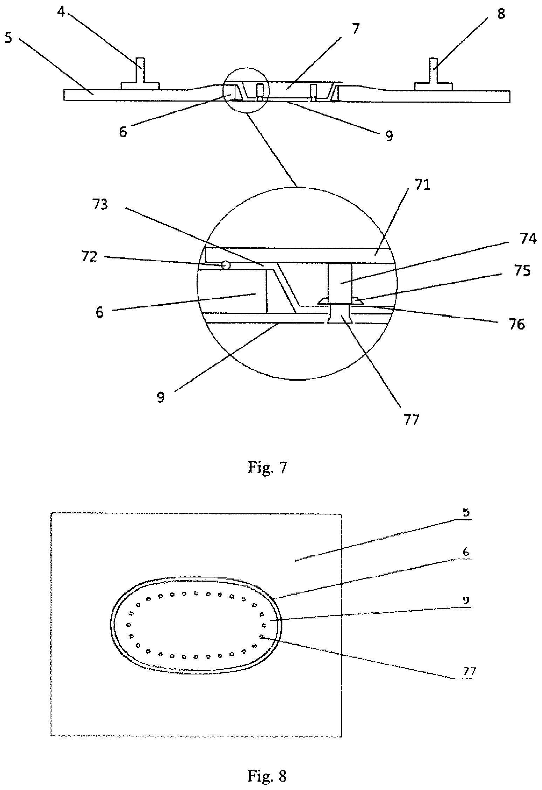

As shown in Fig. 3 to Fig. 4, the present embodiment provides a new solution of an aircraft wing fuel tank access cover and a structure in a circumferential region of the access cover. The periphery of a access cover opening in a wing lower panel 5 is reinforced by intercalation and is set to be sunken to a certain extent to form an intercalation sunken region at access cover of wing lower panel 6, the access cover is designed to be a double-layer access cover. As shown in Fig. 5 to Fig. 8, an inner access cover 7 is of a composite honeycomb sandwich or foam sandwich structure, an outer access cover 9 adopts a titanium alloy or aluminum alloy structure, the inner access cover 7 is formed by co-cementing, a sunken inner access cover skin 76 is firstly formed, an adhesive rivetless floating anchor self-locking nut 74 is adhered to an appropriate position by using an adhesive 75, after curing is completed, the adhesive rivetless floating anchor self-locking nut 74 is filled with a honeycomb sandwich or foam sandwich and is co-cemented with an inner access cover interior skin 71, and the outer ring of the inner access cover 7 is provided with a silicon rubber or polytetrafluoroethylene sealing ring rubber strip to guarantee a demand on the sealing between the access cover and the wing lower panel 5. Specifically, a silicon rubber sealing strip is embedded between the intercalation sunken region at access cover of wing lower panel 6 and the inner access cover interior skin 71; and a polytetrafluoroethylene sealing strip is attached to a junction of the intercalation sunken region at access cover of wing lower panel 6 and the inner access cover interior skin 71. The outer access cover 9 is designed according to the shape of the intercalation sunken region at access cover of wing lower panel 6 and the position of the adhesive rivetless floating anchor self-locking nut 74, so that the demands on the shock resistance and lightning protection of the access cover are guaranteed. As shown in Fig. 7, specifically, a bolt passes through a bolt hole in the outer access cover 9 and the sunken inner access cover skin 76 and is connected with the adhesive rivetless floating anchor self-locking nut 76. The wing lower panel 5 is provided with the intercalation sunken region at access cover of wing lower panel 6, this region is designed to provide a flat mounting region for the composite inner access cover, also guarantee fitting of the outer access cover 9 and the wing lower panel 5, avoid the outer access cover 9 from protruding and effectively increase the aerodynamic efficiency of the wing.

The titanium alloy or aluminum alloy outer access cover is disposed to guarantee the demands on the shock resistance and lightning protection of the fuel tank access cover, play a role in protecting a composite inner access cover and improve the rigidity of the fuel tank access cover; the composite inner access cover is capable of effectively reducing the weight of a fuel tank access cover assembly and also reducing the weight of a wing, so that galvanic corrosion brought by a single aluminum alloy access cover is avoided; the wing lower panel is provided with the intercalation sunken region at access cover of wing lower panel, this region is designed to provide a flat mounting region for the composite inner access cover, also guarantee fitting of the outer access cover and the wing lower panel, avoid access covers from protruding and effectively increase the aerodynamic efficiency of the wing; the composite inner access cover is formed by co-cementing, the sandwich layer adopts a honeycomb structure or a foam structure, thereby providing a certain rigidity, guaranteeing the demand on oil pressure of a fuel tank, and also guaranteeing the manufacture feasibility and the service performance and meeting the sealing and detaching demands of the access cover; and the present invention provides a solution of the composite of the composite inner access cover of a fuel tank, so that it is ensured that functions of the access cover are achieved, and the problem of potential difference possibly brought by a full-metal access cover is avoided.

The aircraft wing fuel tank access cover and the region thereof provided by the embodiments of the present invention are introduced in detail above. The descriptions of the foregoing embodiments are merely intended to help understand the method and core concept of the present invention. Meanwhile, a person of ordinary skill in the art can, based on the concept of the present invention and within the scope of the claims, make modifications with respect to the specific implementations and the application scope. In conclusion, the content of the description should not be understood as a limitation on the present invention.

For example, some vocabularies are used in the description and claims to designate specific assemblies. It can be understood by the skilled in the art that a hardware manufacturer can name the same assembly with different nouns. In the description and claims, a name difference is not used as an assembly distinguishing manner, but a difference of functions of the assemblies is used as a distinguishing criterion. For example, "comprising" or "comprises" mentioned in the entire description and claims is an open-type language so as to be explained as "comprising/comprises, but is not limited to". "Approximate" means that those skilled in the art can solve the technical problems within a certain error range and basically achieve the technical effects within an acceptable error range. Preferred implementations for implementing the present invention will be described later in the description, however, the description is still intended to explain the general principle of the present invention, rather than to limit the scope of the present invention. The protective scope of the present invention shall be subject to the protective scope defined by the appended claims.

It should be further noted that terms "comprises", "comprising" or any other variants thereof are intended to cover non-excludable inclusion, so that a commodity or system comprising a series of elements not only comprises those elements, but also comprises other elements not listed clearly, or further comprises inherent elements of the commodity or system. Under the condition that no more limitations are provided, elements defined by the word "comprising a......"do not exclude other same elements further existing in the commodity or system comprising the elements.

It should be understood that a term "and/or" used herein only denotes an association relationship for describing associated objects and means that there can be three relationships, for example, A and/or B can denote the three situations that A exists alone, A and B exists at the same time, and B exists alone. In addition, the character "/" used herein generally denotes that forward and backward associated objects are in an "or" relationship.

Several preferred embodiments of the present invention are shown in the above-mentioned description, however, as previously mentioned, it should be understood that the present invention is not limited to the form disclosed herein, should not be regarded as the exclusion of other embodiments, can be used for various other combinations, modifications and environments and can be changed within the concept scope of the present claims. The changes and variations made by the skilled in the art are without departing from the scope of the present invention when they fall within the protective scope of the appended claims.

## Claims

1. An aircraft wing fuel tank access cover, comprising an inner access cover (7), an outer access cover (9), a sandwich layer (73), a fixing piece and a fastener;
the inner access cover (7) is configured to be hermetically connected to a wing lower panel (5) and the outer access cover (9) through the sandwich layer (73);
the fixing piece is disposed in the inner access cover (9); and
the fastener passes through a fixing hole in the outer access cover (7) and is connected with the fixing piece,
**characterized in that** the sandwich layer (73) is of a composite honeycomb sandwich structure or a foam sandwich structure.

2. The aircraft wing fuel tank access cover according to claim 1, wherein the outer access cover (9) is of a titanium alloy structure or an aluminum alloy structure.

3. The aircraft wing fuel tank access cover according to claim 1, wherein the fixing piece is an adhesive rivetless floating anchor self-locking nut, and the adhesive rivetless floating anchor self-locking nut is disposed in the inner access cover (7) with an adhesive curing; and
the fastener is a bolt.

4. The aircraft wing fuel tank access cover according to claim 3, wherein when the sealing strip is a silicon rubber sealing strip, the silicon rubber sealing strip is configured to be embedded between the wing lower panel (5) and the inner access cover interior skin; and
the silicon rubber sealing strip is M-shaped or O-shaped.

5. The aircraft wing fuel tank access cover according to claim 3, wherein when the sealing strip is a polytetrafluoroethylene sealing strip, the polytetrafluoroethylene sealing strip is configured to be attached to a junction of the wing lower panel (5) and the inner access cover interior skin.

## Patentansprüche

1. Zugangsabdeckung für einen Kraftstofftank eines Flugzeugflügels, umfassend eine innere Zugangsabdeckung (7), eine äußere Zugangsabdeckung (9), eine Sandwichschicht (73), ein Befestigungsstück und ein Befestigungselement;
die innere Zugangsabdeckung (7) ist dazu eingerichtet, über die Sandwichschicht (73) hermetisch mit einer unteren Flügelplatte (5) und der äußeren Zugangsabdeckung (9) verbunden zu werden;
das Befestigungsstück ist in der inneren Zugangsabdeckung (9) angeordnet; und
das Befestigungselement geht durch ein Befestigungsloch in der äußeren Zugangsabdeckung (7) hindurch und ist mit dem Befestigungsstück verbunden, **dadurch gekennzeichnet, dass** die Sandwichschicht (73) eine Verbundwaben-Sandwichstruktur oder eine Schaum-Sandwichstruktur ist.

2. Die Zugangsabdeckung für einen Kraftstofftank eines Flugzeugflügels gemäß Anspruch 1, wobei die äußere Zugangsabdeckung (9) eine Titanlegierungsstruktur oder eine Aluminiumlegierungsstruktur ist.

3. Die Zugangsabdeckung für einen Kraftstofftank eines Flugzeugflügels gemäß Anspruch 1, wobei das Befestigungsstück eine selbstsichernde schwimmende Ankermutter mit Klebstoff ohne Nietverbindung ist und die selbstsichernde schwimmende Ankermutter mit Klebstoff ohne Nietverbindung in der inneren Zugangsabdeckung (7) mit einem aushärtenden Klebstoff angeordnet ist; und
das Befestigungselement eine Schraube ist.

4. Die Zugangsabdeckung für einen Kraftstofftank eines Flugzeugflügels gemäß Anspruch 3, wobei, wenn der Dichtungsstreifen ein Silikongummi-Dichtungsstreifen ist, der Silikongummi-Dichtungsstreifen dazu eingerichtet ist, zwischen der unteren Flügelplatte (5) und der Innenhaut der inneren Zugangsabdeckung eingebettet zu werden; und
der Silikongummi-Dichtungsstreifen M-förmig oder O-förmig ist.

5. Die Zugangsabdeckung für einen Kraftstofftank eines Flugzeugflügels gemäß Anspruch 3, wobei, wenn der Dichtungsstreifen ein Polytetrafluorethylen-Dichtungsstreifen ist, der Polytetrafluorethylen-Dichtungsstreifen dazu eingerichtet ist, an einer Verbindung der unteren Flügelplatte (5) und der Innenhaut der inneren Zugangsabdeckung angebracht zu werden.

## Revendications

1. Couvercle d'accès au réservoir de carburant d'aile d'aéronef, comprenant un couvercle d'accès intérieur (7), un couvercle d'accès extérieur (9), une couche sandwich (73), une pièce de fixation et une attache ;
le couvercle d'accès intérieur (7) est configuré pour être hermétiquement connecté à un panneau inférieur d'aile (5) et au couvercle d'accès extérieur (9) à travers la couche sandwich (73) ;
la pièce de fixation est disposée dans le couvercle d'accès intérieur (9) ; et
l'attache passe à travers d'un trou de fixation dans le couvercle d'accès extérieur (7) et est connectée avec la pièce de fixation,
**caractérisé en ce que** la couche sandwich (73) est d'une structure sandwich composite en nid d'abeille ou d'une structure sandwich en mousse.

2. Couvercle d'accès au réservoir de carburant d'aile d'aéronef selon la revendication 1, dans lequel le couvercle d'accès extérieur (9) est d'une structure en alliage de titane ou d'une structure en alliage d'aluminium.

3. Couvercle d'accès au réservoir de carburant d'aile d'aéronef selon la revendication 1, dans lequel la pièce de fixation est un écrou adhésif ancre flottant autobloquant sans rivet, et l'écrou adhésif ancre flottant autobloquant sans rivet est disposé dans le couvercle d'accès intérieur (7) avec un durcissement adhésif ; et
l'attache est une vis.

4. Couvercle d'accès au réservoir de carburant d'aile d'aéronef selon la revendication 3, dans lequel lorsque la bande d'étanchéité est une bande d'étanchéité en caoutchouc de silicone, la bande d'étanchéité en caoutchouc de silicone est configurée pour être encastrée entre le panneau inférieur d'aile (5) et la peau intérieure de couvercle d'accès intérieur ; et
la bande d'étanchéité en caoutchouc de silicone est en forme de M ou en forme de O.

5. Couvercle d'accès au réservoir de carburant d'aile d'aéronef selon la revendication 3, dans lequel lorsque la bande d'étanchéité est une bande d'étanchéité en polytétrafluoroéthylène, la bande d'étanchéité en polytétrafluoroéthylène est configurée pour être fixée à une jonction du panneau inférieur d'aile (5) et de la peau intérieure de couvercle d'accès intérieur.
